# EUROPEAN PATENT SPECIFICATION

(11) **EP 3 871 902 B1**
(45) Date of publication and mention of the grant of the patent: **19.07.2023**
(21) Application number: 21158783.7
(22) Date of filing: 23.02.2021
(51) Int. Cl.: B60C 7/14, B60C 13/00

(54) **NON-PNEUMATIC TIRE**
LUFTLOSER REIFEN
PNEU NON PNEUMATIQUE

(30) Priority: 28.02.2020 US 202062982959 P
(43) Date of publication of application: 01.09.2021
(73) Proprietor: The Goodyear Tire & Rubber Company, Akron, OH 44316 (US)
(72) Inventor: FONTAINE, Sebastien Willy, 9188 Vichten (LU); NGO, Frederic, 7562 Mersch (LU); LECONTE, Armand René Gabriel, 9660 Insenborn (LU); BOES, Claude Ernest Felix, 9147 Erpeldange (LU); HINQUE, Daniel Paul Luc Marie, 6720 Habay-la-Neuve (BE); PROEHS, Philippe Joseph Willy, 7750 Colmar-Berg (LU); VANDECLEE, Jean-Francois, 6600 Bastogne (BE); LAMACZ, Romain, 62960 Ligny Les Aires (FR)
(74) Representative: Kutsch, Bernd

(56) References cited:
- EP-A1- 2 801 485
- EP-A2- 3 192 671
- EP-A2- 3 199 373
- GB-A- 152 225
- KR-A- 20140 028 473
- US-A- 912 399
- US-A- 1 050 674
- US-A- 1 185 861
- US-A- 1 421 106

## Description

### Field of the Invention

The present invention relates to a non-pneumatic tire, in particular a non-pneumatic tire having a sidewall.

### Background of the Invention

Recently, multiple tire manufacturers have suggested different designs of non-pneumatic tires. Most of these designs are based on a reinforced rubber shear band supported by a spoke structure on a tire hub or rim. Such tires typically have a laterally open side structure rather than a closed sidewall. While a sidewall may not be absolutely necessary in light of the fact that the tire does not need to enclose a pressurized air cavity, the appearance of such tires may be undesirable. Moreover, stones and dirt may enter in between the spoke structure which may result in an undesirable appearance, negatively affect the resilient function of the spokes or even damage the spokes. Therefore, it may be desirable to provide also a non-pneumatic tire with sidewalls so as to prevent foreign objects from entering the spoke structure and to improve the appearance of the tire. Moreover, non-pneumatic tires have been suggested that have essentially a circular rubber layer covering the space between the tread portion and the hub portion of the tire. However, such layers or sidewalls tend to bulge considerably in an axial direction under load and may in some cases also rupture due to the cyclic motion and flexing of the tire. While such sidewall bulging or rupture may not have an immediate impact on tire safety it is, of course, desirable to avoid such occurrences.

United States Patent 6,298,891 reveals a rim assembly adapted for use in supporting an associated tire fill medium and an associated tread in a non-pneumatic tire assembly, wherein said tread has a ground engaging surface extending between spaced first and second sides, and wherein said tire fill medium is radially inward of said tread and has spaced first and second sides, said rim assembly being characterized by a first rim member having a transversely extending support base including spaced first and second ends and a notch column radially extending from said first end of said support base, said notch column having a first notch adapted to hold said first side of said associated tread and a second notch adapted to hold said first side of said associated tire fill medium; a second rim member having a second notch column, said second notch column having a first notch adapted to hold said second side of said associated tread and a second notch adapted to hold said second side of said associated tire fill medium; a securing means for selectively securing said second rim member in predetermined relationship to said first rim member, said securing means selectively extending between said second rim member and said second end of said support base of said first rim member; and a connecting means extending from a radially inward surface of said support base, said connecting means being adapted to connect said first rim member to an associated vehicle.

United States Patent 8,662,122 describes a non-pneumatic tire comprising a plurality of springs, each spring comprising a first end portion, a second end portion, and an arching middle portion, each spring being interwoven with at least one other spring thereby forming a toroidal structure extending about an entire circumference of the non-pneumatic tire, the toroidal structure being at least partially coated with an elastomer such that the toroidal structure forms an anisotropic structure having different mechanical properties in the circumferential direction of the non-pneumatic tire and the radial direction of the non-pneumatic tire.

United States Patent 8,931,531 discloses a non-pneumatic tire comprising a plurality of springs, each spring comprising a first end portion, a second end portion, and an arching middle portion, each spring being interwoven with at least one other spring thereby forming a toroidal structure extending about an entire circumference of the non-pneumatic tire, the toroidal structure being at least partially coated with an elastomer, one end portion of at least one spring being secured to a first coiled bead spring adjacent to a rim.

United States Patent 9,616713 discloses a composite material comprising a plurality of springs forming a structure embedded within polyurethane, each spring being interwoven with at least one other spring thereby forming an entirely polyurethane-coated structure, the composite material forming a toroidal carcass structure extending about an entire circumference of a non-pneumatic tire, each spring including a first end portion, a second end portion, and an arching middle portion interconnecting the first end portion and the second end portion, each first end portion being secured to a first annular bead and each second portion being secured to a second annular bead, the first and second annular beads both being seated to a wheel rim such that the toroidal carcass structure is secured to the wheel rim wherein the springs are elliptical.

United States Patent 10,040,314 reveals a structurally supported non-pneumatic tire comprising: a ground contacting annular tread portion; a shear band; and a spoke disk connected to the shear band, wherein the spoke disk has two or more circumferential spokes joined together by an upper and lower connecting web, wherein each spoke has an axial thickness less than the axial thickness of the spoke disk, wherein the spring rate of the spoke disk is greater than the spring rate of the shear band. This patent further discloses a structurally supported non-pneumatic tire comprising: a ground contacting annular tread portion; a shear band; and a spoke disk connected to the shear band, wherein the spoke disk has two or more circumferential spokes joined together by an upper and lower connecting web, wherein the spring rate of the spoke disk is greater than the spring rate of the shear band, wherein the spokes are angled at an angle α with respect to the axial direction in the range of 60-80°. United States Patent 10,040,314 also describes a non-pneumatic tire comprising: a ground contacting annular tread portion; a shear band; and at least one spoke disk connected to the shear band, wherein the spoke disk has two or more circumferential spokes joined together by an upper and lower annular connecting web, wherein each connecting web extends the full axial width of the non-pneumatic tire, wherein each circumferential spoke has a spoke width (W) and an axial thickness (t), wherein a ratio of the spoke width to axial thickness (W/t) is in the range between 15 and 80.

United States Patent 10,150,334 discloses a wheel and tire assembly for a mobile vehicle comprising: an inner central hub; an outer shear band and tread structure mounted on the central hub; a spoke structure extending between the central hub and the shear band and tread structure, the spoke structure defining a plurality of cavities disposed concentrically about the central hub whereby the cavities allow the spoke structure to deflect under load; and a reinforcing membrane interlaced circumferentially and radially about the cavities for further tuning the flexibility of the spoke structure.

United States Patent 10,286,725 reveals a wheel for a mobile vehicle comprising: an outer flexible ring mounted to an inner central rim; and a spoke structure extending radially between the central rim and the flexible ring, the spoke structure defining a plurality of closed cavities and an alternating plurality of radially extending openings disposed concentrically about the inner central rim and allowing the flexible ring to deflect under load, the spoke structure further defining a plurality of triangular openings disposed at the outer flexible ring and between the cavities and the inlet openings, the spoke structure comprising a uniform rubber material.

United States Patent 10,308,134 discloses a support assembly for a vehicle travelling along a road surface and rotating relative to the road surface and the vehicle comprising: a spherical tread layer for contacting the road surface; a foam layer adjacent the spherical tread layer, the foam layer including adjustable elements for altering an outer physical contour of the spherical tread layer, the outer physical contour contacting the road surface; a spherical wheel/tire for supporting the spherical tread layer and the vehicle; and a drive system magnetically driving rotation of the spherical wheel/tire relative to the vehicle such that no portion of the spherical tread layer physically contacts the vehicle, the drive system including a radially extending fiber optic element for external communication, a radially extending electronic communication/power bus, and an energy harvester disposed in the foam layer.

United States Patent 10,350,945 discloses a non-pneumatic tire and wheel assembly comprising: a ground contacting annular tread positioned radially outward of a shear band; a reinforcement layer positioned radially inward of the tread, said reinforcement layer being formed of one or more strips oriented in a geodesic path, wherein a radially inner end of the one or more strips is clamped to a wheel rim without the use of a bead, and a radially outer end of the one or more strips is secured between the tread and a shear band.

United States Patent 10,414,209 reveals a non-pneumatic tire comprising a ground contacting annular tread portion; a shear band; and a reinforcement structure positioned radially inward of the tread, said reinforcement structure being formed from a plurality of strips, wherein each strip has a first end located radially outward of the shear band and a second end secured to a bead, wherein the plurality of strips do not extend completely across the annular tread portion.

US 1,421,106, GB 152 225 A, US 912,399, EP 3 192 671 A2, EP 3 199 373 A2, US 1,050,674 and EP 2 801 485 A1 disclose a non-pneumatic tire in accordance with the preamble of claim 1.

### Summary of the invention

One object of the present invention may be to provide an advanced non-pneumatic tire.

Another objective of the present invention may be to provide a non-pneumatic tire which prevents or reduces the possibility of foreign objects entering the volume between a hub portion and a tread portion of the tire.

Another object of the present invention may be to provide a non-pneumatic tire with an improved visual appearance when viewed from the side, in particular when loaded.

Another object of the present invention may be to provide an aerodynamically improved non-pneumatic tire. The improved aerodynamic design of such tires can lead to reduced air resistance or drag which facilitates higher speeds and better electrical energy and/or fuel economy.

The scope of protection of the present invention is defined by independent claim 1. Further preferred embodiments are recited in the dependent claims and the aspects and embodiments provided in the summary and description herein below.

Thus, in a first aspect of the invention, a non-pneumatic tire is provided, the tire comprising a hub portion, a ring member arranged essentially concentrically about (and radially spaced apart from) the hub portion, wherein the ring member comprises a tread portion on its radially outer(most) side (or surface). Moreover, the sidewall connects the hub portion with the ring member, or in other words, extends from the hub portion to the ring member, wherein the sidewall comprises multiple sidewall members, each sidewall member being connected on a first side, or in other words first end, (of the sidewall member) to the hub portion and on a second side, or in other words second end, (of the sidewall member) to the ring member. Adjacent sidewall members at least partially overlap (such as in the circumferential direction) so that they can move relatively to each other when loading and/or unloading the tire. The tire in accordance with this first aspect of the invention comprises a new sidewall concept which comprises a plurality of sidewall members. Adjacent sidewall members overlap at least partially so as to at least partially or fully cover the lateral side of the tire. Moreover, said overlap means that the members lie at least partially on top of each other with respect to the axial direction. Thus, the sidewall members may for instance slide relatively to each other, such as in a circumferential direction, or bend, such as in an axial direction. Large bulges are avoided. In particular, such a tire of a parked car does not or only slightly bulge in an area close to the ground as the sidewall members can relatively move to each other when the tire is loaded. Similarly, when driving, the sidewall members can periodically increase and decrease overlap, such as in an area close to the ground, as the tire rotates on the ground. Moreover, the provision of a plurality of sidewall members each separately attached to the hub portion and the ring member helps to avoid stresses over large sidewall surface areas, in particular compared to the provision of a one-piece sidewall cover.

In one embodiment, the sidewall members are plate-like members, wherein each plate-like member is attached at a first end or face side (of the plate-like sidewall member) to a radially outer side of the hub portion and at a second end or face side (of the plate-like sidewall member) to a radially inner side of the ring portion. In particular, the provision of plate-like sidewall member which may move relatively to one another is a particularly desirable way to provide a tire sidewall with limited bulging under load. In such an embodiment, the plate-like sidewall members extend essentially in a radial and circumferential direction. In other words, the thickness of the plate-like members extends essentially in the axial direction.

In another embodiment, the sidewall members at least partially cover a lateral side of the tire. Thus, a space between the ring member and the hub portion is not visible and protected from dirt and stones. Optionally, resilient spokes may extend between the hub portion and the ring member so that such spokes or spoke structures are also protected from elements entering through the side of the tire.

In still another embodiment, adjacent sidewall members at least partially overlap in an axial direction. This helps to allow a relative motion or sliding motion, e.g. in parallel to the plate-like sidewall members.

In yet another embodiment, adjacent sidewall members are configured to slide against each other upon loading the tire. In other words, the sidewalls members may overlap in a circumferential direction and slide relatively to each other, e.g. in the circumferential and/or radial direction. In further words, adjacent sidewall members are offset in an axial direction so that they can move relatively with respect to each other in circumferential and/or radial directions.

In yet another embodiment, from 6 to 60 (preferably from 10 to 30) sidewall members are arranged circumferentially around the tire. In particular, two neighboring sidewall members overlap. It is desirable that the sidewall comprises at least 6 sidewall members, in particular plate-like members so as to reduce the tendency of bulging of the sidewall. The upper limit of 60 is not mandatory but constitutes a reasonable number to limit complexity of the sidewall construction.

In a non-pneumatic tire according to the present invention one or more of the sidewall members are essentially sickle-shaped, e.g. preferably plate-like sickle shaped members.

Optionally, such members extend essentially transversally from the hub portion and/or join the ring portion at an angle smaller than 45°, preferably smaller than 25°. Closing the tire with a sidewall improves the aerodynamic properties of the tire. Moreover, when providing overlapping sickle-shaped members, said aerodynamics can be further improved, especially when the curvature of the sickle shapes follows the rotational movement of the tire.

In a non-pneumatic tire according to the present invention each sickle-shaped sidewall member is attached to the hub portion at a first circumferential position and attached to the ring member at a second circumferential position, wherein the first circumferential position and the second circumferential position are shifted relatively to each other by an angle of at least 10°, measured in the circumferential direction about an axis of rotation of the tire (in other words in a plane parallel to the equatorial plane of the tire).

In one embodiment, the first circumferential position and the second circumferential position are shifted by between 20° and 150°, preferably between 60° and 130°.

In still another embodiment, the first face side is attached to the hub portion at an angle from 1 ° to 45° (preferably from 2° to 10°) with respect to an equatorial plane of the tire, in other words measured preferably perpendicular to the equatorial plane of the tire. This arrangement helps to ease sliding of the sidewall members relative to each other. Preferably, the interface of a first plate-like element with the hub portion is essentially in parallel to an interface of an adjacent second plate-like element with the hub portion but offset from each other in an axial direction while one circumferential end of the interface of the first plate-like element overlaps with the interface of the second plate-like element. Thus, when viewing in an axial direction there is no slot visible between two adjacent sidewall members as they overlap.

In another embodiment, the second face side is attached to the ring portion at an angle from 1 ° to 45° (preferably from 2° to 10°) with respect to an equatorial plane of the tire. Thus, similarly to the interface between the sidewall members and the hub portion, the interface at which the sidewall member is attached to the radially inner side or surface of the ring member is slightly tilted with respect to the equatorial plane of the tire. This tilt at the given angles facilitates a sliding motion between two adjacent sidewall members. Again the interfaces of two neighboring sidewall members are offset in an axial direction. When viewed in the axial direction, the neighboring sidewall plates overlap each other such that no slot is visible between them when viewed in the axial direction. Preferably, this applies to the loaded and/or non-loaded tire.

In another embodiment, two adjacent plate-like elements, or two adjacent sidewall members in general, at least partially overlap along their extension from the hub portion to the ring member. Preferably, they overlap along at least 80% of their extension from the hub portion to the ring element. Even more preferably, two neighboring sidewall elements overlap along at least 90% or even along 100% of their length between the hub portion and the ring member. This applies again to the loaded or non-loaded tire.

In still another embodiment, the first end or face side extends over a length of between 2% and 20% of the radially outer circumference of the hub portion. Even if said end or face side does not extend exactly along the circumferential direction, e.g. as described herein above, it extends over a certain circumferential length (i.e. projected onto the circumferential direction). It is not desirable to have substantially higher extensions with respect to the circumferential direction as this may increase again sidewall stresses when the tire is loaded and may thus result in relatively large deformations, bulging and may also lead to crack formation.

In still another embodiment, said second end or face side extends over a length of between 2% and 20% of the radially inner circumference of the ring member. As the radially inner circumference of the ring member will be larger than the outer circumference of the hub portion, the length of the connection line of the second end or face side with the radially inner side of the ring member will typically be longer than a corresponding connection line between the hub portion and the first face side.

In still another embodiment, the sidewall members overlap in a non-loaded state by at least 2 mm (and preferably by at most 20 mm) over at least 50% (preferably at least 80%, or even over 100%) of their extension from the hub portion to the ring member. Such an overlap helps to avoid debris entering the space between the hub portion and the ring member.

In still another embodiment, said sidewall members are made of rubber formulations, thermoplastic elastomers, plasticized thermoplastics, polyurethanes, or other flexible polymeric materials. For instance, the sidewall member can comprise a cured (vulcanized) natural or synthetic rubber, such as high cis-1,4-polybutadiene rubber, synthetic polyisoprene rubber, styrene-butadiene rubber, and the like, or blends thereof. The sidewall member can also comprise a thermoplastic elastomer, such as a butadiene/styrene diblock polymer, a styrene/butadiene/styrene triblock polymer, or a butadiene/styrene/butadiene triblock polymer. The sidewall member can also be a plasticized thermoplastic, such as a highly plasticized polyvinylchloride or highly plasticized polyolefin (polyethylene or polypropylene).

In still another embodiment, the tire has two opposite lateral sides, wherein the tire has only one lateral side partially or fully covered with a sidewall (in particular the sidewall in accordance with an embodiment according to the present invention). Leaving one sidewall open, helps to drain water which may enter the space between the hub portion and the ring member. The same applies to dirt or stones, in case any of those where to enter the space between the hub portion and the ring member between the sidewall members. Such an embodiment would rather focus on the appearance of the tire. This configuration allows also cleaning and/or inspecting a spoke structure between the hub portion and the ring member. The tire may then be mounted on a vehicle in a manner that the sidewall is opposite to the wheel hub.

In an embodiment, the hub portion has an essentially hollow cylindrical shape. In such a configuration, the tire may be mounted on a rim fitting the inner diameter of the hub portion.

In another embodiment, the hub portion may be configured for connection to a wheel hub of a vehicle. For instance, the hub portion may comprise axial apertures for receiving bolts or stay bolts for mounting the non-pneumatic tire to a vehicle wheel hub.

In still another embodiment, a lateral side opposite to said sidewall of the tire has at least one aperture for draining water (or for inspection purposes).

In still another embodiment, the sidewall members resiliently support the ring member on the hub portion. Thus, apart from the function of covering the side of the tire against dirt and stone, the sidewall members may also have a supporting function. It is possible that this function at least partially replaces resilient spokes extending between the hub portion and the ring member.

In still another embodiment, the tire further comprises spokes and/or a spoke structure, or in other words supporting structure, resiliently supporting the ring member on the hub portion. Preferably, such a structure is arranged between the laterally opposite sides of the tire within a space between the hub portion and the ring member. Supporting structures of various types and designs are known in the prior art of non-pneumatic tires.

In still another embodiment, said spokes are arranged axially inside of the sidewall members.

In another embodiment, said spokes have essentially rod-like shapes and may optionally have a thickness within a range of 2 mm to 10 mm, preferably from 3 mm to 6 mm.

In still another embodiment, said sidewall members may have an axial thickness within a range of 3 mm to 30 mm, 3 mm to 10 mm, 10 mm to 30 mm. Larger thicknesses may be preferred in case the sidewall has also a supporting function. Thinner thicknesses may be preferred in case the sidewall has rather only a covering function.

In still another embodiment, the ring member comprises a reinforced polymer material. The ring member may also be called a shear band as used in the field of non-pneumatic tires. Such shear bands are described in greater detail in United States Patent 9,834,040, United States Patent 9,849,721, United States Patent 10,040,314, United States Patent 10,040,317, United States Patent 10,071,603, United States Patent 10,150,334, United States Patent 10,207,544, United States Patent 10,259,179, United States Patent 10,286,725, United States Patent 10,350,945, United States Patent 10,384,409, United States Patent 10,406,852, United States Patent 10,414,209, United States Patent 10,457,094, and United States Patent 10,471,773.

In still another embodiment, the tread portion is made of a rubber material. The rubber material of which the tread is comprised can be a natural rubber or a synthetic rubber. This rubber material will typically be a blend of various rubbers including one or more of natural rubber, high-cis-1,4-polybutadiene rubber, solution styrene-butadiene rubber (SSBR), emulsion styrene-butadiene rubber (ESBR), synthetic polyisoprene rubber, isoprene-butadiene rubber, and the like.

The above embodiments may be combined with one another, optionally also with the features mentioned in the detailed description of the invention as described herein below.

### Brief description of the drawings

The structure, operation, and advantages of the invention will become more apparent upon contemplation of the following description taken in conjunction with the accompanying drawings, wherein
Figure 1 is a schematic side view of a tire in accordance with a first embodiment of the invention.
Figure 2a is a schematic partial cross section looking along the radial direction onto a radially outer side of the hub portion with attached sidewall members;
Figure 2b is a schematic partial cross section looking along the radial direction onto a radially outer side of a hub portion with attached sidewall members according to an alternative embodiment of the invention;
Figure 3 is a schematic perspective view of an exemplary spoke structure in accordance with an embodiment of the present invention, whereas the sidewalls and the tread portions are not shown for the sake of clarity; and
Figure 4 is a schematic sideview of the spoke structure already shown in Figure 3.

### Detailed Description of the Embodiments

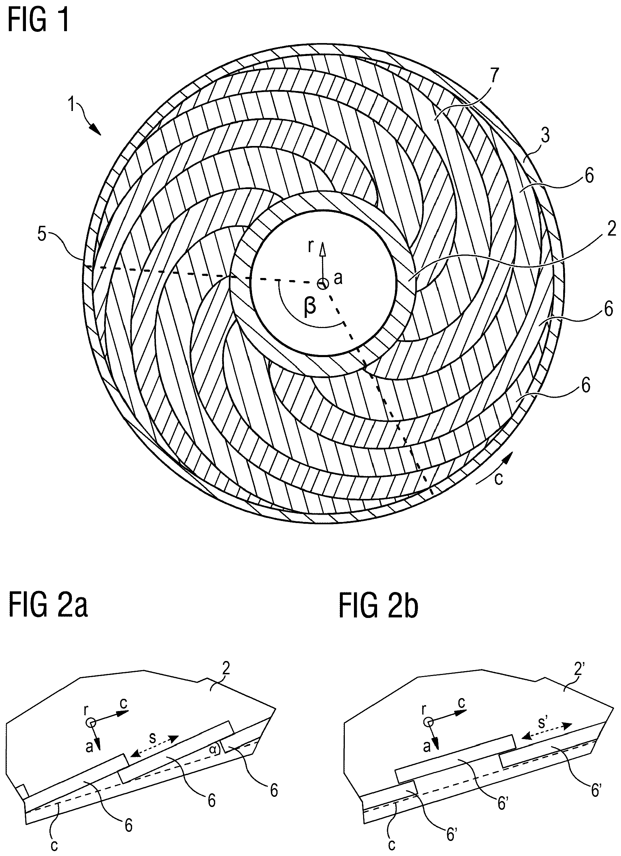

Figure 1 shows an embodiment of a non-pneumatic tire 1 comprising a central hub or hub portion 2, a shear band or ring member 3 carrying a tread portion 5, wherein the hub portion 2 and the ring member 3 are connected by a sidewall 7 comprising a plurality of plate-shaped sidewall members 6. The sidewall members 6 have a sickle-shape, wherein each sidewall member 6 is connected at one end to the central hub portion 2 and at the opposite end to the ring member 3. This sidewall structure is preferably provided only on one lateral side of the tire 1 but may also be provided on both lateral sides of the tire 1. Upon loading the tire 1, e.g. when the tire 1 is mounted to a vehicle, the tire 1 will deform and the sickle-shaped sidewall members 6 can slide relative to each other so as to keep the space between the hub portion 2 and the ring member 3 laterally covered. In particular, it may be avoided by such means that dirt and stones enter the space between the hub portion 2 and the ring member 3. Considerable bulging of the sidewall 7 can be avoided. The sickle-shaped members 6 extend from a first angular position at which they are connected to the hub portion 2 to a second (different) angular position at the ring member 3. This has been illustrated for one sidewall member by the angle β in Figure 1, which is in the drawing in the order of 120°. The angle β is measured in a plane perpendicular to the axial direction a of the tire 1. The indicated radial direction r is also perpendicular to the axial direction a. The circumferential direction c is parallel to the circumference of the tire 1 and parallel to the equatorial plane of the tire (not shown in Figure 1).

Figure 2a is a partial cross-section through some sidewall members 6 viewed along the radial direction r. The sidewall members 6 overlap essentially in a circumferential direction c so that when viewed in the axial direction there is no slot left between adjacent sidewall members 6. In other words, neighboring sidewall members are at least partially axially offset with respect to each other. Moreover, in order to allow a sliding motion in a direction s, which is almost in parallel to the circumferential direction c, the sidewall members have a non-zero angle α with the circumferential direction c. Said angle α is within a range of 5° to 10°. In particular, trailing edges of adjacent sidewall members 6, or preferably of all sidewall members 6, are arranged at the same axial position along the circumference of the hub portion 2. The same applies to the leading edges of the sidewall members 6 which are arranged at the same axial position along the circumferential direction, wherein the axial position of the leading edges is different than the axial position of the trailing edges, in other words said position are axially offset. Similarly to the attachment and/or arrangement of the sidewall members 6 at the hub portion 2, the sidewall members 6 are also attached to the radially inner side of the ring member 3. The sidewall members 6 may join the radially inner side or surface of the ring member 3 at the same or similar angles as suggested herein for the attachment of the sidewall members 6 to the hub portion 2.

Figure 2b shows an alternative embodiment in accordance with the invention with respect to the embodiment already described in the context of Figure 2a. According to Figure 2b, adjacent sidewall members 6' attached to a hub portion 2' can slide relatively to each other along the circumferential direction c. The preferred direction of motion has been further indicated by the sliding direction s' which is in parallel with the circumferential direction c. In other words, adjacent sidewall members 6' are axially offset and (partially) overlap in a circumferential direction. Thus, when viewed in the axial direction the sidewall fully covers the interior of the tire. In accordance with the embodiment shown in Figure 2b, it is preferred that the axial positions of the sidewall elements 6' alternate between a first and a second axial position such that a first sidewall member 6' is axially offset with regard to the position of a circumferentially adjacent second sidewall member 6' and that a third sidewall member 6' adjacent the second sidewall member 6' has again essentially the same axial position as the first sidewall member 6. In other words, each second sidewall member 6' (in the circumferential direction) is axially offset with respect to the remaining sidewall members. In such an embodiment, the number of sidewall members 6' is preferably even.

When making reference herein to axial, radial or circumferential directions (a, r, c), these terms shall be understood as commonly understood in the tire art. In particular, a reference to an axial direction means a direction in parallel to the axis of rotation of the tire. A reference to the circumferential direction is a direction concentric about the axis of rotation of the tire and/or in parallel to an equatorial plane of the tire. The radial direction is perpendicular to the axis of rotation of the tire. The equatorial plane of the tire is also a term which is known to the person skilled in the tire art. In particular it is perpendicular to the axis of rotation of the tire and separates the tire into two equal parts (each of which constitute one-half of the tire).

Axially or laterally behind the sidewall 7 comprising the sidewall members 6, the tire 1 may comprise a plurality of spokes or a spoke structure (not shown in Figures 1 and 2) resiliently supporting the ring member 3 on the hub portion 2.

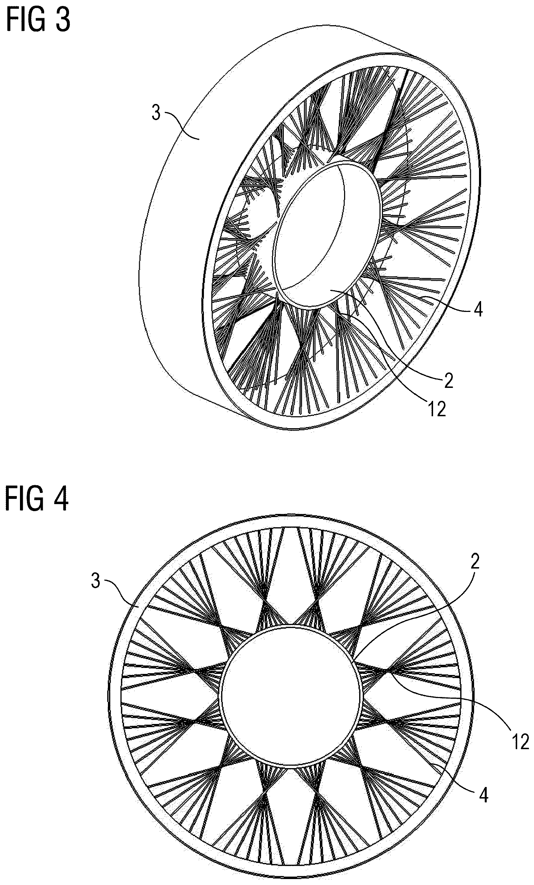

Figures 3 and 4 show a non-limiting embodiment of such spokes 4, which are preferably made of carbon fiber-based material and are arranged in twelve pairs of groups about the circumference of the tire 1. The spokes 4 extend in general from the radially outer surface of the hub portion 2 to the radially inner surface of the ring member 3. Each pair of groups consists of a first group of spokes 4 extending from a line adjacent and along a first axially outer edge of the ring member 3 towards the hub portion 2, wherein the spokes 4 cross beside each other adjacent a crossing point 12 between the hub portion 2 and the ring member 3 and further extend towards and onto the hub or hub portion 2. As shown in Figure 3, the spokes 4 connect to the hub portion 2 at axial positions which are closer to the axial center of the hub portion 2 than the axial positions at which the spokes 4 of the first group are attached to the ring member 3. The second group of spokes 4 of the same pair (each group of the pair being essentially arranged at the same circumferential position or angle) extends from a line adjacent and along a second axially outer edge of the ring member 3 (axially opposite to said first edge) towards the hub portion 2. The spokes 4 of the second group cross beside each other adjacent a common crossing point between the hub portion 2 and the ring member 3 and further extend towards and onto the hub portion 2. Again the spokes 4 connect to the hub at axial positions which are closer to the axial center of the hub portion 2 than the axial position at which the spokes 4 of the second group are attached to the ring member 3. Such an arrangement may improve the stiffness of the tire 1 with regard to lateral forces.

Moreover, as shown in Figure 3, the spokes 4 of a group (sharing a common crossing point 12) are preferably attached to the hub portion 2 along a non-straight line extending in the axial and circumferential directions. Such an arrangement improves stability with regard to lateral forces further. Preferably, the crossing points 12 of all pairs have a radial distance to the radially outer surface of the hub portion 2 which is less than 50% (even more preferably between 45% and 25%) of the radial distance between the radially outer side of the hub portion 2 and the radially inner side of the ring member 3.

While the spokes have been shown in accordance with Figures 3 and 4 as rod-like elements, such spokes may for instance have plate-like shapes and/or a lattice-like or grid-like structure. Thus, in an embodiment of the invention, the resilient supporting structure arranged between the hub portion 2 and the ring member 3 can be provided as known in the existing art of non-pneumatic tires. In an example, the ring member could be circumferentially supported on the hub portion 2 by a resilient supporting structure extending about the hub portion 2 to support the ring member 3 on the hub portion 2.

In general, hub portion 2, spokes 4, sidewall members 6 and the shear band or ring member 3 may comprise a polymer material or composition.

## Claims

1. A non-pneumatic tire (1) comprising:
a hub portion (2);
a ring member (3) arranged essentially concentrically about the hub portion (2), the ring member (3) comprising a tread portion (5) on its radially outer side; and
a sidewall (7) connecting the hub portion (2) with the ring member (3), wherein the sidewall (7) comprises multiple sidewall members (6), each sidewall member (6) being connected on a first side to the hub portion (2) and on a second side to the ring member (3), wherein adjacent sidewall members (6) at least partially overlap such that they can move relatively to each other when loading the tire,
**characterized in that**
one or more of the sidewall members (6) are essentially sickle shaped, and **in that** each sickle-shaped sidewall member (6) is attached to the hub portion (2) at a first circumferential position and attached to the ring member (3) at a second circumferential position, wherein the first circumferential position and the second circumferential position are shifted relatively to each other by at least 10° measured in the circumferential direction about an axis of rotation of the tire.

2. The non-pneumatic tire according to claim 1, wherein the sidewall members (6) are plate-like members, and wherein each plate-like member (6) is attached at a first face side to a radially outer side of the hub portion (2) and at a second face side to a radially inner side of the ring portion (3).

3. The non-pneumatic tire according to claim 2, wherein the first face side is attached to the hub portion (2) at an angle within a range from 1° to 45° with respect to an equatorial plane of the tire (1); and/or the second face side is attached to the ring portion (3) at an angle within a range from 1° to 45° with respect to an equatorial plane of the tire (1).

4. The non-pneumatic tire according to claim 2 or 3, wherein two adjacent plate-like members (6) at least partially overlap along their extension from the hub portion (2) to the ring member (3).

5. The non-pneumatic tire according to one of claims 2 to 4, wherein the first face side extends over a length of between 2% and 20% of the radially outer circumference of the hub portion (2); and/or the second face side extends over a length of between 2% and 20% of the radially inner circumference of the ring member (3).

6. The non-pneumatic tire according to one or more of the preceding claims, wherein the sidewall members (6) cover a lateral side of the tire (1).

7. The non-pneumatic tire according to one or more of the preceding claims, wherein adjacent sidewall members (6) are at least partially offset in an axial direction; and/or from 6 to 60 sidewall members (6) are arranged circumferentially around the tire (1).

8. The non-pneumatic tire according to one or more of the preceding claims, wherein the first circumferential position and the second circumferential position are shifted relatively to each other by between 20° and 150°.

9. The non-pneumatic tire according to one or more of the preceding claims, wherein the sidewall members (6) overlap in a non-loaded state by at least 2 mm over at least 50% of their length of extension from the hub portion (2) to the ring member (3).

10. The non-pneumatic tire according to one or more of the preceding claims, wherein said sidewall members (6) comprise at least one polymeric material selected from the group consisting of rubber formulations, thermoplastic elastomers, plasticized thermoplastics, and polyurethanes.

11. The non-pneumatic tire according to one or more of the preceding claims, wherein the tire (1) has two opposite lateral sides, and wherein the tire (1) has only one sidewall (7).

12. The non-pneumatic tire according to one or more of the preceding claims, wherein a lateral side of the tire (1) between hub portion (2) and ring member (3), which is opposite to said sidewall (7), has at least one aperture or is left open.

13. The non-pneumatic tire according to one or more of the preceding claims, wherein the sidewall members (6) resiliently support the ring member (3) on the hub portion (2).

14. The non-pneumatic tire according to one or more of the preceding claims, further comprising spokes (4) resiliently supporting the ring member (3) on the hub portion (2).

15. The non-pneumatic tire according to claim 14, wherein said spokes (4) are arranged axially inside of the sidewall members (6).

## Patentansprüche

1. Nicht-pneumatischer Reifen (1) umfassend :
einen Nabenabschnitt (2) ;
ein im Wesentlichen konzentrisch um den Nabenabschnitt (2) angeordnetes Ringelement (3), wobei das Ringelement (3) an seiner radial äußeren Seite einen Laufflächenabschnitt (5) umfasst; und
eine Seitenwand (7), die den Nabenabschnitt (2) mit dem Ringelement (3) verbindet, wobei die Seitenwand (7) mehrere Seitenwandelemente (6) umfasst, wobei jedes Seitenwandelement (6) auf einer ersten Seite mit dem Nabenabschnitt (2) und auf einer zweiten Seite mit dem Ringelement (3) verbunden ist, wobei benachbarte Seitenwandelemente (6) sich zumindest elementweise derart überlappen, dass sie sich beim Beladen des Reifens relativ zueinander bewegen können ;
**dadurch gekennzeichnet, dass**
eines oder mehrere der Seitenwandelemente (6) im Wesentlichen sichelförmig ausgebildet sind, und dass jedes sichelförmige Seitenwandelement (6) in einer ersten Umfangsposition am Nabenabschnitt (2) befestigt und in einerzweiten Umfangsposition am Ringelement (3) befestigt ist, wobei die erste Umfangsposition und die zweite Umfangsposition gegeneinander um einen in Umfangsrichtung um die Drehachse des Reifens gemessen Winkel von mindestens 10° relativ zueinander verschoben sind.

2. Nicht-pneumatischer Reifen nach Anspruch 1, wobei die Seitenwandelemente (6) plattenartige Elemente sind, und wobei jedes plattenartige Element (6) an einer ersten Stirnseite an einer radial äußeren Seite des Nabenabschnitts (2) befestigt ist und an einer zweiten Stirnseite zu einer radial inneren Seite des Ringelement (3).

3. Nicht-pneumatischer Reifen nach Anspruch 2, wobei die erste Stirnseite mit dem Nabenabschnitt (2) unter einem Winkel im Bereich von 1° bis 45° in Bezug auf eine äquatoriale Ebene des Reifens (1) verbunden ist, und/oder die zweite Stirnseite mit dem Ringelement (3) unter einem Winkel im Bereich von 1° bis 45° in Bezug auf eine äquatoriale Ebene des Reifens (1) verbunden ist.

4. Nicht-pneumatischer Reifen nach Anspruch 2 oder 3, wobei zwei benachbarte plattenartige Elemente (6) sich entlang ihrer Erstreckung vom Nabenabschnitt (2) zum Ringelement (3) zumindest elementweise überlappen.

5. Nicht-pneumatischer Reifen nach einem der Ansprüche 2 bis 4, wobei die erste Stirnseite sich über eine Länge zwischen 2% und 20% des radial äußeren Umfangs des Nabenabschnitts (2) erstreckt, und/oder die zweite Stirnseite sich über eine Länge zwischen 2% und 20% des radial inneren Umfangs des Ringelements (3) erstreckt.

6. Nicht-pneumatischer Reifen nach einem oder mehreren der vorhergehenden Ansprüche, wobei die Seitenwandelemente (6) eine Seitenseite des Reifens (1) abdecken.

7. Nicht-pneumatischer Reifen nach einem oder mehreren der vorhergehenden Ansprüche, wobei benachbarte Seitenwandelemente (6) zumindest elementweise in axialer Richtung versetzt sind, und/oder von 6 bis 60 Seitenwandelemente (6) umlaufend um den Reifen (1) angeordnet sind.

8. Nicht-pneumatischer Reifen nach einem oder mehreren der vorhergehenden Ansprüche, wobei die erste Umfangsposition und die zweite Umfangsposition relativ zueinander um zwischen 20° und 150° verschoben sind.

9. Nicht-pneumatischer Reifen nach einem oder mehreren der vorhergehenden Ansprüche, wobei die Seitenwandelemente (6) sich in einem unbelasteten Zustand um mindestens 2 mm über mindestens 50% ihrer Erstreckungslänge vom Nabenabschnitt (2) zum Ringelement (3) überlappen.

10. Nicht-pneumatischer Reifen nach einem oder mehreren der vorhergehenden Ansprüche, wobei die Seitenwandelemente (6) mindestens ein polymeres Material umfassen, das aus der Gruppe ausgewählt ist, die aus Gummiformulierungen, thermoplastischen Elastomeren, plastifizierten Thermoplasten und Polyurethanen besteht.

11. Nicht-pneumatischer Reifen nach einem oder mehreren der vorhergehenden Ansprüche, wobei der Reifen (1) zwei gegenüberliegende Seitenseiten aufweist, und wobei der Reifen (1) nur eine Seitenwand (7) aufweist.

12. Nicht-pneumatischer Reifen nach einem oder mehreren der vorhergehenden Ansprüche, wobei eine Seitenseite des Reifens (1) zwischen dem Nabenabschnitt (2) und dem der Seitenwand (7) gegenüberliegenden Ringelement (3) mindestens eine Öffnung aufweist oder offen gelassen wird.

13. Nicht-pneumatischer Reifen nach einem oder mehreren der vorhergehenden Ansprüche, wobei die Seitenwandelemente (6) das Ringelement (3) auf dem Nabenabschnitt (2) federnd abstützen.

14. Nicht-pneumatischer Reifen nach einem oder mehreren der vorhergehenden Ansprüche, der ferner Speichen (4) aufweist, die das Ringelement (3) auf dem Nabenabschnitt (2) federnd abstützen.

15. Nicht-pneumatischer Reifen nach Anspruch 14, wobei die Speichen (4) axial innerhalb der Seitenwandelemente (6) angeordnet sind.

## Revendications

1. Bandage non pneumatique (1) qui comprend :
une portion (2) faisant office de moyeu ;
un élément de forme annulaire (3) disposé essentiellement en position concentrique autour de la portion (2) faisant office de moyeu, l'élément de forme annulaire (3) comprenant une portion (5) faisant office de bande de roulement sur son côté externe dans la direction radiale ; et
un flanc (7) qui relie la portion (2) faisant office de moyeu à l'élément de forme annulaire (3) ; dans lequel le flanc (7) comprend plusieurs éléments de flanc (6), chaque élément de flanc (6) étant relié à un premier côté à la portion(2) faisant office de moyeu et à un deuxième côté à l'élément de forme annulaire (3) ; dans lequel des éléments de flanc adjacents (6) se chevauchent au moins en partie d'une manière telle qu'ils peuvent se déplacer l'un par rapport à l'autre au cours du chargement du bandage pneumatique ;
**caractérisé en ce que**
un ou plusieurs des éléments de flanc (6) possède(nt) une configuration essentiellement en forme de croissant, et **en ce que** chaque élément de flanc (6) possédant une configuration en forme de croissant est fixé à la portion (2) faisant office de moyeu à une première position circonférentielle et est fixé à l'élément de forme annulaire (3) à une deuxième position circonférentielle ; dans lequel la première position circonférentielle et la deuxième position circonférentielle sont décalées l'une par rapport à l'autre à concurrence d'au moins 10° lorsqu'on procède à la mesure dans la direction circonférentielle autour d'un axe de rotation du bandage.

2. Bandage non pneumatique selon la revendication 1, dans lequel les éléments de flanc (6) représentent des éléments qui prennent la forme de plaques ; et dans lequel chaque élément de flanc (6) qui prend la forme d'une plaque est fixé à un côté avant à un côté externe dans la direction radiale de la portion (2) faisant office de moyeu et à un deuxième côté avant à un côté interne dans la direction radiale de la portion de forme annulaire (3).

3. Bandage non pneumatique selon la revendication 1 ou 2, dans lequel le premier côté avant est fixé à la portion (2) faisant office de moyeu en formant un angle dans une plage allant de 1° 45° par rapport à un plan équatorial du bandage (1) ; et/ou le deuxième côté avant est fixé à la portion (3) de forme annulaire en formant un angle dans une plage allant de 1° 45° par rapport à un plan équatorial du bandage (1).

4. Bandage non pneumatique selon la revendication 2 ou 3, dans lequel deux éléments de flanc adjacents (6) qui prennent la forme de plaques se chevauchent au moins en partie sur leur étendue à partir de la portion (2) faisant office de moyeu jusqu'à l'élément de forme annulaire (3).

5. Bandage non pneumatique selon l'une quelconque des revendications 2 à 4, dans lequel le premier côté avant s'étend sur une longueur qui représente entre 2 % et 20 % de la circonférence externe dans la direction radiale de la portion (2) faisant office de moyeu ; et/ou le deuxième côté avant s'étend sur une longueur qui représente entre 2 % et 20 % de la circonférence interne dans la direction radiale de l'élément de forme annulaire (3).

6. Bandage non pneumatique selon une ou plusieurs des revendications précédentes, dans lequel les éléments de flanc (6) recouvrent un côté latéral de bandage (1).

7. Bandage non pneumatique selon une ou plusieurs des revendications précédentes, dans lequel des éléments de flanc adjacents (6) sont décalés au moins en partie dans une direction axiale ; et/ou de 6 à 60 éléments de flanc (6) sont disposés dans la direction circonférentielle autour du bandage (1).

8. Bandage non pneumatique selon une ou plusieurs des revendications précédentes, dans lequel la première position circonférentielle et la deuxième position circonférentielle sont décalées l'une par rapport à l'autre en formant un angle entre 20° et 150°.

9. Bandage non pneumatique selon une ou plusieurs des revendications précédentes, dans lequel les éléments de flanc (6) se chevauchent, dans un état non chargé, sur une distance d'au moins 2 mm sur au moins 50 % de la longueur de leur étendue à partir de la portion (2) faisant office de moyeu jusqu'à l'élément de forme annulaire (3).

10. Bandage non pneumatique selon une ou plusieurs des revendications précédentes, dans lequel lesdits éléments de flanc (6) comprennent au moins une matière polymère qui est choisie parmi le groupe constitué par des formulations de caoutchouc, des élastomères thermoplastiques, des matières thermoplastiques plastifiées et des polyuréthanes.

11. Bandage non pneumatique selon une ou plusieurs des revendications précédentes, dans lequel le bandage (1) possède deux côtés latéraux opposés ; et dans lequel le bandage (1) possède un seul flanc (7).

12. Bandage non pneumatique selon une ou plusieurs des revendications précédentes, dans lequel un côté latéral du bandage (1) entre la portion (2) faisant office de moyeu et l'élément de forme annulaire (3), qui est opposé audit flanc (7), possède au moins une ouverture ou est laissé ouvert.

13. Bandage non pneumatique selon une ou plusieurs des revendications précédentes, dans lequel les éléments de flanc (6) supportent de manière résiliente les éléments de forme annulaire (3) sur la portion (2) faisant office de moyeu.

14. Bandage non pneumatique selon une ou plusieurs des revendications précédentes, qui comprend en outre des rayons (4) qui supportent de manière résiliente l'élément de forme annulaire (3) sur la portion (2) faisant office de moyeu.

15. Bandage non pneumatique selon la revendication 14, dans lequel lesdits rayons (4) sont disposés dans la direction axiale à l'intérieur des éléments de flanc (6).
